# EUROPÄISCHE PATENTSCHRIFT

(11) **EP 0 767 042 B1**
(45) Veröffentlichungstag und Bekanntmachung des Hinweises auf die Patenterteilung: **14.06.2000**
(21) Anmeldenummer: 96115010.9
(22) Anmeldetag: 19.09.1996
(51) Int. Cl.: B29C 45/14, B65G 47/90

(54) **Handlingsystem für eine Kunststoff-Spritzgiessmaschine und Verfahren zum Einlegen von Einlegeteilen**
Handling system for a plastic injection moulding machine and method for inserting inserts
Système de manipulation pour une machine à mouler par injection des matières plastiques et procédé pour insérer des inserts

(30) Priorität: 03.10.1995 DE 19536876
(43) Veröffentlichungstag der Anmeldung: 09.04.1997
(73) Patentinhaber: HERBST, Richard, D-85386 Eching (DE)
(72) Erfinder: HERBST, Richard, D-85386 Eching (DE)
(74) Vertreter: Witte, Alexander, Dr.-Ing.

(56) Entgegenhaltungen:
- JP-A- 1 053 753
- JP-A- 2 286 212
- JP-A- 60 230 812

## Beschreibung

Die Erfindung betrifft eine Kunststoff-Spritzgießmaschine zum Herstellen von Kunststoffgegenständen mit darin eingespritzten Einlegeteilen in Form von Einzelteilen oder Sätzen, mit
a) einem Werkzeug, das mit einer Mehrzahl von Formhohlräumen versehen ist, wobei sich die Formhohlräume im Werkzeug hinsichtlich der Orientierung der Kunststoffgegenstände unterscheiden;
b) Werkstückträgern zum Zuführen der Einlegeteile; und
c) einem Handlingsystem, mit
   - einer ersten Handlingvorrichtung zum Zusammenstellen der von den Werkstückträgern zugeführten Einlegeteile zu Gruppen, wobei jeweils ein Einlegeteil einer Gruppe einem vorbestimmten Formhohlraum zugeordnet ist und nach dem Zusammenstellen einer Gruppe die Orientierung der Einlegeteile in der Gruppe gleich der unterschiedlichen Orientierung der Einlegeteile in den Formhohlräumen ist; und
   - einer zweiten Handlingvorrichtung zum Einlegen der Gruppen von Einlegeteilen in Formhohlräume.

Die Erfindung betrifft ferner ein Verfahren zum Herstellen von Kunststoffgegenständen mit darin eingespritzten Einlegeteilen in Form von Einzelteilen oder Sätzen in einer Kunststoff-Spritzgießmaschine mit einem Werkzeug, das mit einer Mehrzahl von Formhohlräumen versehen ist, wobei sich die Formhohlräume hinsichtlich der Orientierung der Kunststoffgegenstände unterscheiden und jeweils ein Einlegeteil einer Gruppe einem vorbestimmten Formhohlraum zugeordnet ist, mit Werkstückträgern zum Zuführen der Einlegeteile und mit einem Handlingsystem, umfassend die Schritte:
a) Zusammenstellen der von den Werkstückträgern zugeführten Einlegeteile zu den Gruppen mittels einer ersten Handlingvorrichtung, wobei die Gruppen derart zusammengestellt werden, daß nach dem Zusammenstellen einer Gruppe die Orientierung der Einlegeteile in der Gruppe gleich der unterschiedlichen Orientierung der Einlegeteile in den Formhohlräumen ist; und
b) Einlegen der Gruppen von Einlegeteilen in Formhohlräume mittels einer zweiten Handlingvorrichtung.

Eine Spritzgießmaschine sowie ein Verfahren der vorstehend genannten Art sind aus der JP 2 286 212 A bekannt.

Es ist bekannt, beim Spritzgießen von Kunststoffgegenständen während des Einspritzvorganges Teile mit einzuspritzen. Diese Teile können beispielsweise Armierungen, Scharniere, Befestigungsteile, metallische Kontaktelemente von elektrischen Steckverbindungen oder dergleichen sein.

Beim Spritzgießen von Kunststoffgegenständen ist es ferner bekannt, Werkzeuge zu verwenden, bei denen entsprechende Formhohlräume in einer Trennebene des Werkzeuges angeordnet sind. Aus spritztechnischen Gründen ist es dabei häufig erforderlich, daß die einzelnen Formhohlräume hinsichtlich der Orientierung der darin gespritzten Gegenstände unterschiedlich sind. So können die Formhohlräume beispielsweise sternförmig zu einem gemeinsamen, zentralen Versorgungskanal orientiert sein.

Wenn man in diesem Fall Einlegeteile der eingangs genannten Art vor dem Spritzgießvorgang in die Formhohlräume einbringen möchte, so muß darauf geachtet werden, daß in jedem Formhohlraum das zugehörige Einlegeteil in der jeweiligen Orientierung des Formhohlraums eingelegt wird.

Bislang bekannte Handlingsysteme haben diese Aufgabe in einer sehr komplizierten Weise gelöst, indem das Handlingsystem für jeden einzelnen Formhohlraum eine neue Orientierung eingenommen hat. Dies setzt einen erheblichen Programmieraufwand voraus und kann im Betrieb zu Störungen führen, insbesondere wenn die Taktzeiten der Kunststoff-Spritzgießmaschine so kurz wie möglich gehalten werden sollen.

Häufig werden auch mehrere Einlegeteile pro Formhohlraum vorgesehen, beispielsweise bei elektrischen Steckverbindungen, bei denen mehrere metallische Kontaktelemente mit Kunststoff umspritzt werden. Dabei können z.B. vier Formhohlräume vorgesehen werden, in denen jeweils fünf Einlegeteile angeordnet sind. Die insgesamt zwanzig Einlegeteile müssen dann in kurzer Zeit auf engem Raum jeweils lagerichtig und in vorgegebener Ausrichtung eingelegt werden.

Aus dem eingangs genannten Dokument JP 2 286 212 ist eine Kunststoff-Spritzgießmaschine in Karussellbauweise bekannt. Das als Karussell ausgebildete Werkzeug umfaßt vier um jeweils 90° über den Umfang verteilte Positionen für jeweils acht Formhohlräume. Eine der vier Positionen ist eine Bestückungsposition. In dieser Bestückungsposition kann in den Formhohlraum ein Einlegeteil, nämlich ein Satz von je fünf unterschiedlich orientierten elektrischen Kontaktzungen für einen Bauelementesockel eingelegt werden.

Zum Einlegen der acht Einlegeteile (Sätze) dient ein um 180° schwenkbarer Greifer. Der Greifer ist zu einem Förderband verschwenkbar, mit dem ihm Paletten zugeführt werden. Auf jeder Palette befinden sich acht Einlegeteile (Sätze) in der gewünschten Orientierung der Einlegeteile. Dabei sind vier Sätze gleich orientiert und die anderen vier Sätze klappsymmetrisch, also um 180° gedreht, orientiert. An dem vom Greifer entgegengesetzten Ende des Förderbandes befinden sich auf beiden Seiten des Förderbandes jeweils fünf Bestückungsautomaten mit jeweils eigenem Zuführsystem, wobei jeder Bestückungsautomat jeweils eines der Einzelteile eines Satzes in der vorgegebenen, also immer in derselben Orientierung auf einen vorbestimmten Platz innerhalb eines Satzes einsetzt.

Aus dem Dokument GB-A-2 158 003 A1 ist ein Handlingsystem und ein Verfahren zum Umspritzen von Halbleiterschaltkreisen (sogenannten Leadframes) bekannt. Die Leadframes werden dabei parallel zueinander und nebeneinander gruppenweise angeordnet. Jeweils eine Gruppe der so angeordneten Leadframes wird in einen Formhohlraum überführt, in dem sich bereits entsprechende Aussparungen für die Leadframes befinden. Mit einem Spritzvorgang werden dann innerhalb eines Formhohlraums insgesamt 14 Halbleiterschaltkreise gespritzt. Bei diesem bekannten Verfahren sind alle Leadframes gleich ausgerichtet, nämlich parallel zueinander.

Der Erfindung liegt demgegenüber die Aufgabe zugrunde, eine Kunststoff-Spritzgießmaschine sowie ein Verfahren der eingangs genannten Art dahingehend weiterzubilden, daß die vorstehend geschilderten Nachteile vermieden werden. Insbesondere soll das unmittelbar an der Kunststoff-Spritzgießmaschine tätige Handlingsystem in seinen Taktzeiten verkürzt und vereinfacht werden.

Diese Aufgabe wird bei einer Kunststoff-Spritzgießmaschine der eingangs genannten Art dadurch gelöst, daß die erste Handlingvorrichtung die Einlegeteile beim Zusammenstellen der Gruppen einzeln und nacheinander handhabt und orientiert.

Bei einem Verfahren der eingangs genannten Art wird bei einem Werkzeug, bei dem sich die Formhohlräume hinsichtlich der Orientierung der Kunststoffgegenstände unterscheiden und jeweils ein Einlegeteil einer Gruppe einem vorbestimmten Formhohlraum zugeordnet ist, die Aufgabe erfindungsgemäß dadurch gelöst, daß die Einlegeteile mittels der ersten Handlingvorrichtung beim Zusammenstellen der Gruppen einzeln und nacheinander gehandhabt und orientiert werden.

Die der Erfindung zugrundeliegende Aufgabe wird auf diese Weise vollkommen gelöst.

Bei dem erfindungsgemäßen System werden nämlich die Einlegeteile durch die Tätigkeit der ersten Handlingvorrichtung bereits in einer Orientierung angeboten, die der Orientierung der mehreren Einlegeteile innerhalb derselben Gruppe in den entsprechenden Formhohlräumen des Werkzeugs entspricht. Man kann daher zum Beispiel unverändert, wie beim Stand der Technik, von einer Anlieferung der Einlegeteile auf Paletten ausgehen, bei der die Einlegeteile alle in derselben Orientierung angefahren werden. Die erste Handlingvorrichtung orientiert und gegebenenfalls positioniert die Einlegeteile dann gruppenweise so, daß diese im wesentlichen unverändert in die Formhohlräume verbracht und dort eingelegt werden können.

Das Problem der Positionierung und Orientierung der Einlegeteile wird damit in einen Bereich außerhalb der eigentlichen Kunststoff-Spritzgießmaschine verlegt und separat behandelt, so daß der gesamte Ablauf schneller stattfinden kann und zum Beispiel die Prozeßzeiten beim Spritzgießen des Werkzeugs dazu genutzt werden können, um bereits die nächste Gruppe der Einlegeteile in der erforderlichen Weise zu orientieren und zu positionieren.

Bei einer bevorzugten Ausgestaltung der Erfindung werden die Einlegeteile der ersten Handlingvorrichtung in einer Anzahl, die ungleich der Anzahl in der Gruppe ist, vorzugsweise einzeln, zugeführt.

Diese Maßnahme hat den Vorteil, daß herkömmliche Zuführeinrichtungen eingesetzt werden können, mit denen die Einlegeteile einzeln oder beispielsweise paarweise aus einem Speicher zugeführt werden.

Gemäß der Erfindung orientiert die erste Handlingvorrichtung die Einlegeteile hingegen nur einzeln, und es ist ein Umsetzer vorgesehen, der die einzeln orientierten Einlegeteile zu vollständigen, orientierten Gruppen zusammenstellt.

Diese Maßnahme hat den Vorteil, daß eine höhere Fließgeschwindigkeit im System möglich ist, weil die zum Beispiel einzeln zugeführten Einlegeteile jeweils einzeln orientiert werden, so daß der Strom an Einlegeteilen, der die erste Handlingvorrichtung verläßt, gleich dem Strom der Einlegeteile ist, die der ersten Handlingvorrichtung zugeführt werden.

In diesem Falle ist besonders bevorzugt, wenn die Gruppe aus Zeilen und Spalten besteht und der Umsetzer die von der ersten Handlingvorrichtung einzeln orientiert zugeführten Einlegeteile zeilenweise zu den Gruppen zusammenstellt.

Diese Maßnahme hat den Vorteil, daß auch der weitere Ablauf stromabwärts der ersten Handlingvorrichtung ohne Zwischenpufferungen ausgelegt werden kann, weil die einzeln weitergeförderten (nun schon orientierten) Einlegeteile nacheinander zeilenweise zu den Gruppen zusammengestellt werden.

Bei einer anderen Gruppe von Ausführungsbeispielen werden die Einzelteile der ersten Handlingvorrichtung in einer Anzahl zugeführt, die der Anzahl in der Gruppe entspricht.

Diese Maßnahme hat den Vorteil, daß unter Inkaufnahme eines etwas erhöhten Aufwandes beim Zuführen der Einlegeteile vom Speicher zur ersten Handlingvorrichtung der weitere Ablauf schneller gestaltet werden kann, weil die Einlegeteile von Anfang an gruppenweise gefördert werden.

Im Rahmen der vorliegenden Erfindung ist besonders bevorzugt, wenn die Einlegeteile der ersten Handlingvorrichtung auf Werkstückträgern oder Paletten zugeführt werden.

Diese Maßnahme hat den Vorteil, daß Standard-Fördereinrichtungen verwendet werden können, die nur für unterschiedliche Einlegeteile jeweils entsprechend modifiziert werden müssen.

Wenn die Einlegeteile der ersten Handlingvorrichtung bereits gruppenweise zugeführt werden und zu diesem Zweck auf Paletten angeordnet sind, ist besonders bevorzugt, wenn die Einlegeteile auf den Paletten an Positionen angeordnet sind, deren relative Koordinaten zueinander den relativen Koordinaten der Formhohlräume zueinander im Werkzeug entsprechen, und die erste Handlingvorrichtung lediglich die Einlegeteile auf ihren Positionen orientiert.

Diese Maßnahme hat den Vorteil, daß nach dem Verlassen der ersten Handlingvorrichtung eine Anordnung der Einlegeteile vorliegt, die eine unmittelbare Überführung, d.h. ein Einlegen, in die Formhohlräume gestattet.

Eine besonders gute Wirkung wird dadurch erzielt, daß die zweite Handlingvorrichtung die Einlegeteile gruppenweise in die Formhohlräume einlegt.

Schließlich ist bevorzugt, wenn die erste und die zweite Handlingvorrichtung baulich vereinigt sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines ersten Ausführungsbeispiels eines erfindungsgemäßen Handlingsystems;
- Fig. 2: eine Darstellung, ähnlich Fig. 1, jedoch für ein zweites Ausführungsbeispiel eines erfindungsgemäßen Handlingsystems; und
- Fig. 3: eine weitere Darstellung, ähnlich Fig. 1, jedoch für ein drittes Ausführungsbeispiel eines erfindungsgemäßen Handlingsystems.

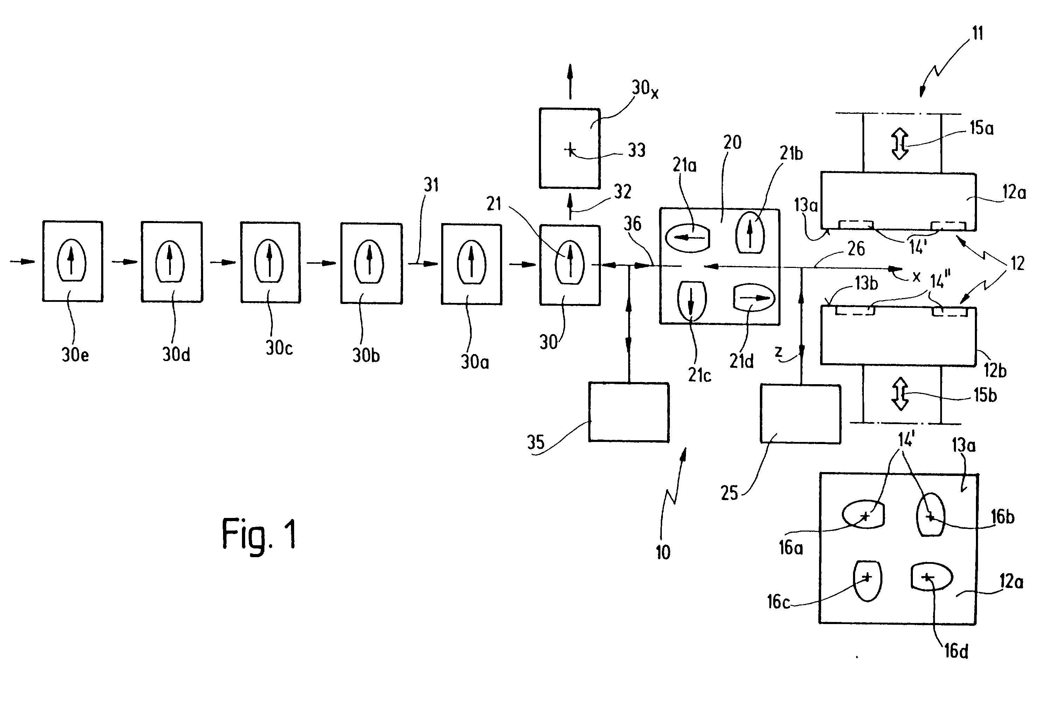

In Fig. 1 bezeichnet 10 insgesamt ein Handlingsystem gemäß der vorliegenden Erfindung. Eine Kunststoff-Spritzgießmaschine 11, die in Fig. 1 nur äußerst schematisch angedeutet ist, verfügt über ein Werkzeug 12, das seinerseits zwei Formhälften 12a, 12b umfaßt. Die Formhälften 12a, 12b sind mit Oberflächen 13a, 13b versehen, die im geschlossenen Zustand des Werkzeugs 12 aneinanderliegen.

In die Oberflächen 13a, 13b sind Formhohlräume 14', 14'', sogenannte Kavitäten, eingearbeitet. Wenn das Werkzeug 12, wie mit Pfeilen 15a, 15b angedeutet, aus der in Fig. 1 dargestellten offenen Position in eine geschlossene Position verfahren wird, liegen die Oberflächen 13a, 13b, wie erwähnt, aneinander, und die Formhohlräume 14', 14'' können in an sich bekannter und daher nicht nochmals dargestellter Weise mit Kunststoffmasse ausgefüllt werden.

Unten rechts in Fig. 1 ist mit einer Seitenansicht die Oberfläche 13a der Werkzeughälfte 12a dargestellt. Man erkennt, daß die Formhohlräume 14' an bestimmten Positionen 16a bis 16d angeordnet sind, die zueinander um bestimmte Koordinatenabstände beabstandet sind. Man erkennt ferner aus dieser Darstellung, daß die Formhohlräume 14' orientiert sind, wie noch erläutert werden wird.

In Fig. 1 befindet sich links neben dem Werkzeug 12 ein erster Werkstückträger, nämlich eine erste Palette 20. Auf der ersten Palette 20 sind vier Einlegeteile 21a bis 21d angeordnet. Mit Pfeilen ist in den Einlegeteilen 21a bis 21d angedeutet, daß diese unterschiedlich orientiert sind. Wie man leicht sieht, entspricht die Orientierung der Einlegeteile 21a bis 21d der Orientierung der Formhohlräume 14' in der Oberfläche 13a.

Eine erste Handlingvorrichtung 25 dient zum Einlegen der Einlegeteile 21a bis 21d in die Formhohlräume 14' oder 14''. Zu diesem Zweck weist die erste Handlingvorrichtung 25 einen ersten Handlingarm 26 auf. Der erste Handlingarm 26 kann vorzugsweise in mehreren Koordinaten verfahren werden, wie mit x und y angedeutet ist. Darüber hinaus kann der erste Handlingarm 26 auch in weiteren Freiheitsgraden bewegt werden, beispielsweise durch Drehen, Kippen und dergleichen.

Zum Zuführen der Einlegeteile sind zweite Werkstückträger oder Paletten vorgesehen, die in Fig. 1 mit 30, 30a bis 30e bezeichnet sind. Im dargestellten Ausführungsbeispiel trägt jede dieser zweiten Paletten 30, 30a bis 30e ein einziges Einlegeteil 21. Die zweiten Paletten 30, 30a bis 30e werden nacheinander in eine Position links neben der ersten Palette 20 verfahren, wie mit Pfeilen 31 für eine erste Transportrichtung bezeichnet. Sie werden anschließend nach der Entnahme des Einlegeteils 21 in einer zweiten Richtung 32 wieder weggefahren, wie mit einer leeren zweiten Palette 30x angedeutet, auf der die nunmehr leere Position 33 für das Einlegeteil 21 erkennbar ist.

Eine zweite Handlingvorrichtung 35 befindet sich zwischen der ersten Palette 20 und der am nächsten herangefahrenen zweiten Palette 30. Die zweite Handlingvorrichtung 35 verfügt über einen zweiten Handlingarm 36, der ebenfalls entlang mehrerer Koordinaten/Freiheitsgrade bewegbar ist.

Es versteht sich dabei, daß unter einem "Einlegeteil" auch ein Satz derartiger Einlegeteile zu verstehen ist. So kann z.B. in Fig. 1 das Einlegeteil 21 auf der Palette 30 aus einem Satz von z.B. fünf gleichen oder unterschiedlichen Teilen bestehen, beispielsweise fünf metallischen Kontaktelementen für eine elektrische Steckverbindung. Diese können von unterschiedlichen Quellen zugeführt werden, d.h. von Paletten, von Schwingförderern, von Abstanzvorrichtungen und dergleichen.

Die Arbeitsweise der in Fig. 1 dargestellten Anordnung ist wie folgt:

In einem Betrieb, der eine Kunststoff-Spritzgießmaschine 11 mit zugehörigem Handlingsystem 10 betreibt, werden die Einlegeteile üblicherweise von einem Zulieferer angeliefert. Der Zulieferer liefert die Einlegeteile 21 nach Möglichkeit in einer Form an, in der sie am besten in großen Mengen transportiert werden können, d.h. in möglichst gestapelter und kompakter Form. Die Einlegeteile 21 werden dann auf die zweiten Paletten 30 umgeladen, sofern dies nicht bereits vom Zulieferer erledigt wird. Die zweiten Paletten 30 werden dabei gleichförmig mit Einlegeteilen 21 bestückt, so daß diese entweder einzeln oder zu mehreren in gleicher Ausrichtung auf den zweiten Paletten 30 angeordnet sind.

In dieser Form gelangen die Einlegeteile 21 in den Arbeitsbereich des Handlingsystems 10. Das zweite Handlingsystem 35 nimmt nun das Einlegeteil 21 von der jeweils nächsten zweiten Palette 30 ab und überführt es auf die erste Palette 20. Während dieser Überführung wird das Einlegeteil 21 nicht nur in eine Position gebracht, die den Positionen 16a bis 16d im Werkzeug 12 entspricht, die Einlegeteile 21a bis 21d werden dabei vielmehr zugleich orientiert, und zwar in einer Orientierung, (zum Beispiel "nach rechts", "nach links", "nach oben", "nach unten"; "unter 30° zur Horizontalen nach links geneigt" usw.), die der Orientierung der Formhohlräume 14', 14'' im Werkzeug 12 entspricht. Auf diese Weise erhält man die in Fig. 1 dargestellte Anordnung der Einlegeteile 21a bis 21d auf der ersten Palette 20.

Die erste Handlingvorrichtung 25 braucht dann die Einlegeteile 21a bis 21d nur noch von der ersten Palette abzunehmen und in die entsprechenden Formhohlräume 14', 14'' zu verbringen, wobei die Orientierung der Einlegeteile 21a bis 21d nicht mehr geändert zu werden braucht.

Beispielsweise kann das Einlegen dadurch geschehen, daß die erste Palette 20 in den Zwischenraum zwischen den Formhälften 12a, 12b einfährt, so daß die Einlegeteile 21a bis 21d nur noch jeweils ein kurzes Stück in Richtung der Pfeile 15a, 15b in die zugehörigen Formhohlräume 14', 14'' eingelegt werden müssen.

Dies kann jeweils einzeln oder jeweils zu mehreren geschehen.

Die Formhälften 12a, 12b werden nach dem Einlegen geschlossen, so daß dann der Einspritzvorgang stattfinden kann. Während der Schließbewegung, des Einspritzvorganges und der anschließenden Öffnungsbewegung kann im Interesse einer Zeitersparnis bereits die nächste Gruppe von vier Einlegeteilen 21a bis 21d mittels der zweiten Handlingvorrichtung 35 von den nachfolgenden zweiten Paletten 30a bis 30d abgenommen und auf der ersten Palette 20 lagerichtig und in korrekter Orientierung angeordnet werden.

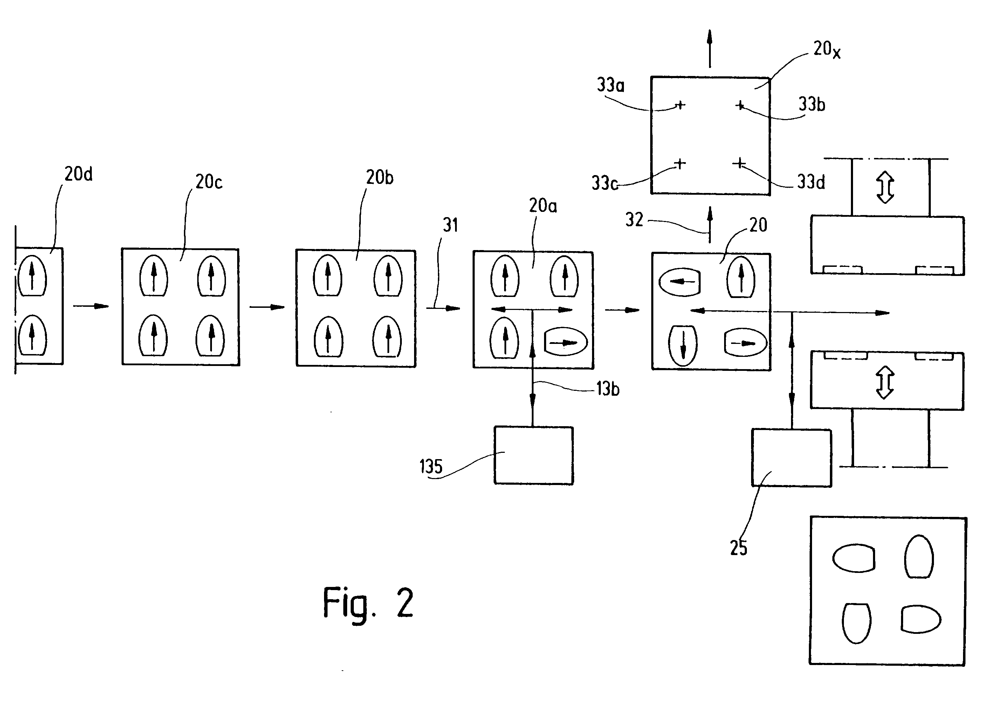

Bei der in Fig. 2 dargestellten Variante ist der Ablauf prinzipiell derselbe wie bei der Anordnung gemäß Fig. 1. Zur weiteren Zeitersparnis ist dort lediglich vorgesehen, daß die zweiten Paletten 20a bis 20d in diesem Falle im wesentlichen baugleich mit der ersten Palette 20 ausgebildet sind. Die Einlegeteile werden in diesem Falle bereits in der endgültigen Position, aber noch mit einer einheitlichen Orientierung angeliefert. Das zweite Handlingsystem 135 mit einem zweiten Handlingarm 136 braucht in diesem Falle nur noch die Einlegeteile auf der zweiten Palette 20a umzuorientieren, während die Lage nicht verändert zu werden braucht.

In diesem Falle kann sogar die erste Palette 20 als eigenständiges Bauteil entfallen, weil die zweiten Paletten 20a bis 20d in den Bereich der ersten Palette 20 verfahren und dort ebenso behandelt werden können, wie dies beim Ausführungsbeispiel gemäß Fig. 1 mit der ersten Palette 20 der Fall war. Die leere Palette 20x wird dann beispielsweise in der um 90° abgewinkelten Richtung 32 wieder weggefahren, wie in Fig. 2 deutlich zu erkennen ist. Man erkennt dort auch die Positionen 33a bis 33d, auf der sich die Einlegeteile zuvor befunden hatten.

Man erkennt, daß es auf diese Weise möglich ist, bei Werkzeugen mit mehreren Formhohlräumen unterschiedlicher Orientierung und Werkstücken, die mit Einlegeteilen versehen werden, eine erhebliche Zeitersparnis und eine Vereinfachung der Handlingvorrichtung zu erzielen.

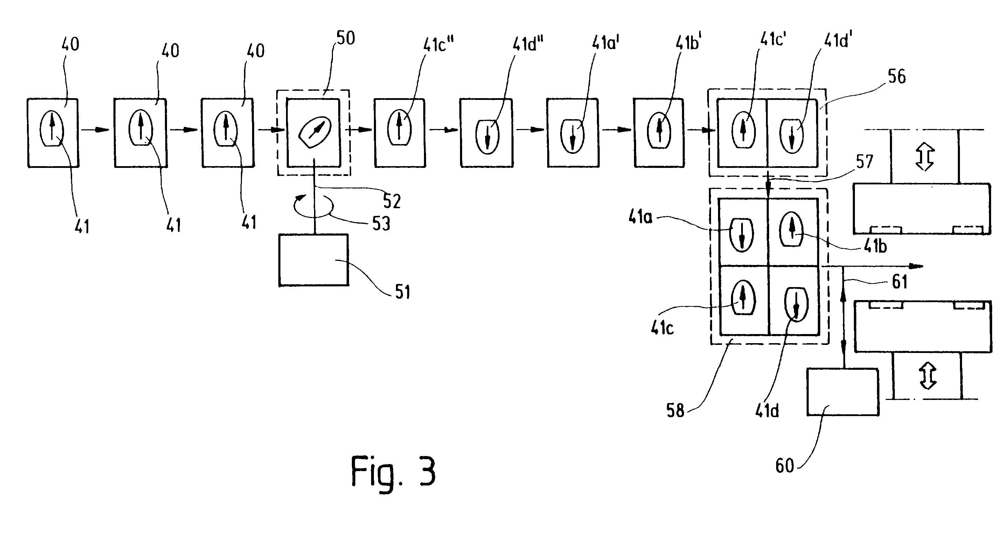

Bei dem in Fig. 3 dargestellten Handlingsystem werden wiederum, ähnlich wie beim Ausführungsbeispiel gemäß Fig. 1, Einzelpaletten 40 verwendet, auf denen sich jeweils ein Einlegeteil 41 befindet. Die einzeln zugeführten Einlegeteile 41 gelangen zunächst in den Bereich einer Orientierungsstation 50. Der Orientierungsstation 50 ist eine erste Handlingvorrichtung 51 mit einem ersten Handlingarm 52 zugeordnet. Mit einem Pfeil 53 ist angedeutet, daß die erste Handlingvorrichtung 51 es ermöglicht, das jeweils in der Orientierungsstation 50 befindliche Einlegeteil zu orientieren. Dies kann dadurch geschehen, daß, wie in Fig. 3 dargestellt, nur das Einlegeteil auf der Palette orientiert wird. Alternativ kann aber auch die gesamte Palette mit dem darauf befindlichen Einlegeteil orientiert werden.

Nach dem Verlassen der Orientierungsstation 50 haben die Einlegeteile in vorbestimmter Weise eine unterschiedliche Orientierung, wie noch erläutert werden wird.

Die Paletten mit den darauf befindlichen Einlegeteilen gelangen schließlich auf einen Umsetzer 56, auf dem im dargestellten Ausführungsbeispiel jeweils zwei Paletten zusammengefaßt werden. Ein Pfeil 57 deutet an, daß die jeweils zwei Paletten einer Bereitstellungsstation 58 zugeführt werden, auf der jeweils zwei aufeinanderfolgende Paare von Paletten, insgesamt also vier Paletten angeordnet sind.

Die in Fig. 3 dargestellten vier Paletten in der Bereitstellungsstation 58 sollen beispielhaft den ebenfalls vier Formhohlräumen entsprechen, wie dies bereits weiter oben zu den Fig. 1 und 2 erläutert wurde. Mit 41a, 41b, 41c und 41d sind die vier Orientierungen der Einlegeteile in der Bereitstellungsstation 58 bezeichnet. Die Einlegeteile 41a, 41b bilden dabei eine obere Zeile, und die Einlegeteile 41c, 41d eine untere Zeile der insgesamt aus zwei Zeilen und zwei Spalten bestehenden Gruppe von Einlegeteilen in der Bereitstellungsstation 58.

Die vier Einlegeteile 41a bis 41d können nun in der bereits beschriebenen Weise mittels einer zweiten Handlingvorrichtung 60, die einen zweiten Handlingarm 61 aufweist, in die Formhohlräume eingelegt werden. Dies geschieht vorzugsweise dadurch, daß der zweite Handlingarm 61 alle vier Einlegeteile 41a bis 41d zusammen ergreift und zusammen in die vier zugehörigen Formhohlräume einlegt.

Betrachtet man das System nun wiederum stromaufwärts, so erkennt man, daß im Umsetzer 56 bereits die nächste Zeile mit zwei Einlegeteilen 41c', 41d' bereitsteht, die nach dem Einlegen der vier Einlegeteile 41a bis 41d auf die untere Position in der Bereitstellungsstation 58 überführt werden soll. Wiederum stromaufwärts des Umsetzers 56 werden zwei weitere Einlegeteile 41a', 41b' herangeführt, die nach dem Umsetzen der Einlegeteile 41c', 41d' auf den Umsetzer 56 gelangen werden, um danach ebenfalls der Bereitstellungsstation 58 in der oberen Zeile der Gruppe zugeführt zu werden. Sobald dies geschehen ist, wäre die Bereitstellungsstation 58 wiederum mit vier richtig orientierten Einlegeteilen 41a', 41d' bestückt.

Weiter stromaufwärts ist zu erkennen, daß am Ausgang der Orientierungsstation 50 bereits die erste Zeile 41c'', 41d'' der übernächsten Gruppe orientiert worden ist, die schließlich in der unteren Zeile der Bereitstellungsstation 58 angeordnet sein wird.

## Patentansprüche

1. Kunststoff-Spritzgießmaschine zum Herstellen von Kunststoffgegenständen mit darin eingespritzten Einlegeteilen (21a bis 21d; 41a bis 41d) in Form von Einzelteilen oder Sätzen, mit
a) einem Werkzeug (12), das mit einer Mehrzahl von Formhohlräumen (14', 14") versehen ist, wobei sich die Formhohlräume (14', 14") im Werkzeug (12) hinsichtlich der Orientierung der Kunststoffgegenstände unterscheiden;
b) Werkstückträgern zum Zuführen der Einlegeteile (21a bis 21d; 41a bis 41d); und
c) einem Handlingsystem (10), mit
- einer ersten Handlingvorrichtung (35; 51; 135) zum Zusammenstellen der von den Werkstückträgern zugeführten Einlegeteile (21a bis 21d; 41a bis 41d) zu Gruppen, wobei jeweils ein Einlegeteil (21a bis 21d; 41a bis 41d) einer Gruppe einem vorbestimmten Formhohlraum (14', 14") zugeordnet ist und nach dem Zusammenstellen einer Gruppe die Orientierung der Einlegeteile (21a bis 21d; 41a bis 41d) in der Gruppe gleich der unterschiedlichen Orientierung der Einlegeteile (21a bis 21d; 41a bis 41d) in den Formhohlräumen (14', 14") ist; und
- einer zweiten Handlingvorrichtung (25; 60) zum Einlegen der Gruppen von Einlegeteilen (21a bis 21d; 41a bis 41d) in Formhohlräume (14, 14"),
dadurch gekennzeichnet, daß die erste Handlingvorrichtung (35; 51; 135) die Einlegeteile (21a bis 21d; 41a bis 41d) beim Zusammenstellen der Gruppen einzeln und nacheinander handhabt und orientiert.

2. Handlingsystem nach Anspruch 1, dadurch gekennzeichnet, daß die Einlegeteile (21a bis 21d; 41a bis 41d) der ersten Handlingvorrichtung (35; 51) in einer Anzahl, die ungleich der Anzahl in der Gruppe ist, vorzugsweise einzeln, zugeführt werden.

3. Handlingsystem nach Anspruch 2, dadurch gekennzeichnet, daß die erste Handlingvorrichtung (35) die Einlegeteile (21a bis 21d) zu vollständigen, orientierten Gruppen zusammenstellt.

4. Handlingsystem nach Anspruch 2, dadurch gekennzeichnet, daß die erste Handlingvorrichtung (51) die Einlegeteile (41a bis 41d) nur einzeln orientiert und daß ein Umsetzer (56) vorgesehen ist, der die einzeln orientierten Einlegeteile (41a bis 41d) zu vollständigen, orientierten Gruppen zusammenstellt.

5. Handlingsystem nach Anspruch 4, dadurch gekennzeichnet, daß die Gruppe aus Zeilen und Spalten besteht, und daß der Umsetzer (56) die von der ersten Handlingvorrichtung (51) einzeln orientiert zugeführten Einlegeteile (41a bis 41d) zeilenweise zu den Gruppen zusammenstellt.

6. Handlingsystem nach Anspruch 1, dadurch gekennzeichnet, daß die Einlegeteile der ersten Handlingvorrichtung (135) in einer Anzahl zugeführt werden, die der Anzahl in der Gruppe entspricht.

7. Handlingsystem nach einem oder mehreren der Ansprüche 1 bis 6, dadurch gekennzeichnet, daß die Einlegeteile (21a bis 21d; 41a bis 41d) der ersten Handlingvorrichtung (35; 135; 51) auf Paletten (20 bis 20d, 30 bis 30e; 40) zugeführt werden.

8. Handlingsystem nach Anspruch 7, dadurch gekennzeichnet, daß die Einlegeteile (21a bis 21d, 41a bis 41d) von der ersten Handlingvorrichtung (35; 135; 51) auf den Paletten (20 bis 20d; 30 bis 30e, 40) orientiert werden.

9. Handlingsystem nach Anspruch 7, dadurch gekennzeichnet, daß die Einlegeteile von der ersten Handlingvorrichtung zusammen mit den Paletten orientiert werden.

10. Handlingvorrichtung nach Anspruch 7 oder 8, dadurch gekennzeichnet, daß die Paletten (20 bis 20d) jeweils eine Anzahl von Einlegeteilen (21a bis 21d) tragen, die gleich der Anzahl der Einlegeteile (21a bis 21d) je Gruppe ist oder gleich einem ganzzahligen Vielfachen oder ganzzahligen Bruchteil davon.

11. Handlingsystem nach Anspruch 10, dadurch gekennzeichnet, daß die Einlegeteile (21a bis 21d) auf den Paletten (20 bis 20d) an Positionen (33a bis 33d) angeordnet sind, deren relative Koordinaten zueinander den relativen Koordinaten der Formhohlräume (14', 14'') zueinander im Werkzeug (12) entsprechen, und daß die erste Handlingvorrichtung (135) lediglich die Einlegeteile (21a bis 21d) auf ihren Positionen (33a bis 33d) orientiert.

12. Handlingsystem nach einem oder mehreren der Ansprüche 1 bis 11, dadurch gekennzeichnet, daß die zweite Handlingvorrichtung (25; 60) die Einlegeteile (21a bis 21d; 41a bis 41d) gruppenweise in die Formhohlräume (14', 14'') einlegt.

13. Handlingsystem nach einem oder mehreren der Ansprüche 1 bis 12, dadurch gekennzeichnet, daß die erste und die zweite Handlingvorrichtung baulich vereinigt sind.

14. Verfahren zum Herstellen von Kunststoffgegenständen mit darin eingespritzten Einlegeteilen (21a bis 21d; 41a bis 41d) in Form von Einzelteilen oder Sätzen in einer Kunststoff-Spritzgießmaschine mit einem Werkzeug (12), das mit einer Mehrzahl von Formhohlräumen (14', 14") versehen ist, wobei sich die Formhohlräume (14', 14") hinsichtlich der Orientierung der Kunststoffgegenstände unterscheiden und jeweils ein Einlegeteil (21a bis 21d; 41a bis 41d) einer Gruppe einem vorbestimmten Formhohlraum (14', 14") zugeordnet ist, mit Werkstückträgern zum Zuführen der Einlegeteile (21a bis 21d; 41a bis 41d) und mit einem Handlingsystem (10), umfassend die Schritte:
a) Zusammenstellen der von den Werkstückträgern zugeführten Einlegeteile (21a bis 21d; 41a bis 41d) zu den Gruppen mittels einer ersten Handlingvorrichtung (35; 51; 135), wobei die Gruppen derart zusammengestellt werden, daß nach dem Zusammenstellen einer Gruppe die Orientierung der Einlegeteile (21a bis 21d; 41a bis 41d) in der Gruppe gleich der unterschiedlichen Orientierung der Einlegeteile (21a bis 21d; 41a bis 41d) in den Formhohlräumen (14', 14") ist; und
b) Einlegen der Gruppen von Einlegeteilen (21a bis 21d; 41a bis 41d) in Formhohlräume (14, 14") mittels einer zweiten Handlingvorrichtung (25; 60) ,
dadurch gekennzeichnet, daß
c) die Einlegeteile (21a bis 21d; 41a bis 41d) mittels der ersten Handlingvorrichtung (35; 51; 135) beim Zusammenstellen der Gruppen einzeln und nacheinander gehandhabt und orientiert werden.

## Claims

1. A plastic material injection molding machine for producing individual plastic material articles or sets of plastic material articles, having inserts (21a - 21d; 41a - 41d) embedded therein, comprising:
a) a mold (12) having a plurality of cavities (14', 14"), the cavities (14', 14") in the mold (12) being distinct with respect to the orientation of the plastic material articles;
b) workpiece carriers for feeding the inserts (21a - 21d; 41a - 41d); and
c) a handling system (10), having
- a first handling assembly (35; 51; 135) for composing the inserts (21a - 21d; 41a - 41d) into groups when fed from the workpiece carriers, one each insert (21a - 21d; 41a - 41d) of a group being allocated to one specific cavity (14', 14"), the orientation of the inserts (21a - 21d; 41a - 41d) within the group after the composing corresponding to the distinct orientation of the inserts (21a - 21d; 41a - 41d) in the cavities (14', 14"); and
- a second handling assembly (25; 60) for placing the groups of inserts (21a - 21d; 41a - 41d) into cavities (14', 14"),
characterized in that the first handling assembly (35; 51; 135) handles and orientates the inserts (21a - 21d; 41a - 41d) individually and one after the other during the composition of the groups.

2. The handling system of claim 1, characterized in that the inserts (21a - 21d; 41a - 41d) are fed to the first handling assembly (35; 51) in a number being unequal to the number within the group, preferably individually.

3. The handling system of claim 2, characterized in that the first handling assembly (35) composes the inserts (21a - 21d) into complete, oriented groups.

4. The handling system of claim 2, characterized in that the first handling assembly (51) composes the inserts (41a - 41d) only individually, and that a transfer device (56) is provided composing the individually oriented inserts (41a - 41d) into complete, oriented groups.

5. The handling system of claim 4, characterized in that the group consists of lines and columns, and that the transfer device (56) composes the inserts (41a - 41d) linewise into groups when fed individually oriented from the first handling assembly (51).

6. The handling system of claim 1, characterized in that the inserts are fed to the first handling assembly (135) in a number corresponding to the number within the group.

7. The handling system of one or more of claims 1 to 6, characterized in that the inserts (21a - 21d; 41a - 41d) are fed to the first handling assembly on pallets (20 - 20d, 30 - 30e; 40).

8. The handling system of claim 7, characterized in that the inserts (21a - 21d; 41a - 41d) are oriented by the first handling assembly (35; 135; 51) on the pallets (20 - 20d, 30 - 30e; 40)

9. The handling system of claim 7, characterized in that the inserts are oriented by the first handling assembly together with the pallets.

10. The handling system of claim 7 or 8, characterized in that the pallets (20a - 20d) each carry a number of inserts (21a - 21d) being equal to the number of inserts (21a - 21d) per group or equal to an integer multiple or an integer fraction thereof.

11. The handling system of claim 10, characterized in that the inserts (21a - 21d) are arranged on the pallets (20-20d) at positions (33a - 33d), the relative coordinates of which corresponding to the relative coordinates of the cavities (14', 14") in the mold (12), and that the first handling assembly (135) only orientates the inserts (21a - 21d) at their positions (33a - 33d).

12. The handling system of one or more of claims 1 to 11, characterized in that the second handling assembly (25; 60) places the inserts (21a - 21d; 41a - 41d) into the cavities (14', 14") as groups.

13. The handling system of one or more of claims 1 to 12, characterized in that the first and the second handling assembly are structurally integrated together.

14. A method for producing individual plastic material articles or sets of plastic material articles having inserts (21a - 21d; 41a - 41d) embedded therein by means of a plastic material injection molding machine having a mold (12) with a plurality of cavities (14', 14"), the cavities (14', 14") being distinct with respect to the orientation of the plastic material articles, one insert (21a - 21d; 41a - 41d) each within a group being allocated to one predetermined cavity (14', 14"), workpiece carriers for feeding the inserts (21a - 21d; 41a - 41d), and a handling system (10), the method comprising the steps of:
a) composing the inserts (21a - 21d; 41a - 41d) into groups by means of a first handling assembly (35; 51; 135) when fed from the workpiece carriers, the groups being composed such that after the composition of a group the orientation of the inserts (21a - 21d; 41a - 41d) within the group corresponds to the distinct orientation of the inserts (21a - 21d; 41a - 41d) in the cavities (14', 14"); and
b) placing the groups of inserts (21a - 21d; 41a - 41d) into cavities (14', 14") by means of a second handling assembly (25; 60),
characterized in that
c) the inserts (21a - 21d; 41a - 41d) are handled and oriented individually and one after the other during the composition of the groups by the first handling assembly (35; 51; 135).

## Revendications

1. Machine à mouler par injection des matière plastique pour la fabrication d'objets en matières plastiques contenant des inserts surmoulés (21a à 21d ; 41a à 41d) sous forme d'éléments individuels ou d'ensembles, avec
a) un outil (12) doté d'une pluralité de cavités (14', 14''), lesdites cavités (14', 14'') de l'outil (12) se différenciant par l'orientation des objets en matière plastique ;
b) des porte-pièce pour amener les inserts (21a à 21d ; 41a à 41d) ; et
c) un système de manipulation (10), avec
- un premier dispositif de manipulation (35 ; 51 ; 135) pour rassembler en groupes les inserts (21a à 21d ; 41a à 41d) amenés par les porte-pièce, étant entendu qu'à chaque fois un insert (21a à 21d ; 41a à 41d) d'un groupe est associé à une cavité (14', 14'') prédéterminée et qu'après la constitution d'un groupe, l'orientation des inserts (21a à 21d ; 41a à 41d) dans le groupe est identique à l'orientation desdits inserts (21a à 21d ; 41a à 41d) dans les cavités (14', 14'') ; et
- un second dispositif de manipulation (25 ; 60) pour insérer les groupes d'inserts (21a à 21d ; 41a à 41d) dans les cavités (14', 14"),
caractérisée en ce que le premier dispositif de manipulation (35 ; 51 ; 135) manipule et oriente les inserts (21a à 21d ; 41a à 41d) individuellement et successivement lors de la constitution des groupes.

2. Système de manipulation selon la revendication 1, caractérisé en ce que les inserts (21a à 21d ; 41a à 41d) sont amenés au premier dispositif de manipulation (35 ; 51) en un nombre différent du nombre d'inserts dans le groupe, et de préférence un par un.

3. Système de manipulation selon la revendication 2, caractérisé en ce que le premier dispositif de manipulation (35) rassemble les inserts (21a à 21d) en des groupes complets orientés.

4. Système de manipulation selon la revendication 2, caractérisé en ce que le premier dispositif de manipulation (51) oriente les inserts (41a à 41d) uniquement un par un et en ce qu'il est prévu un dispositif de transfert (56), qui rassemble les inserts orientés individuellement (41a à 41d) en des groupes orientés complets.

5. Système de manipulation selon la revendication 4, caractérisé en ce que le groupe se compose de lignes et de colonnes, et en ce que le dispositif de transfert (56) rassemble les inserts (41a à 41d), amenés orientés individuellement par le premier dispositif de manipulation (51), par lignes pour constituer les groupes.

6. Système de manipulation selon la revendication 1, caractérisé en ce que les inserts sont amenés au premier dispositif de manipulation (135) en un nombre correspondant au nombre d'inserts dans le groupe.

7. Système de manipulation selon l'une au moins des revendications 1 à 6, caractérisé en ce que les inserts (21a à 21d ; 41a à 41d) sont amenés au premier dispositif de manipulation (35 , 135 ; 51) sur des palettes (20 à 20d ; 30 à 30e ; 40).

8. Système de manipulation selon la revendication 7, caractérisé en ce que les inserts (21a à 21d, 41a à 41d) sont orientés sur les palettes (20 à 20d ; 30 à 30e ; 40) par le premier dispositif de manipulation (35 ; 135 ; 51).

9. Système de manipulation selon la revendication 7, caractérisé en ce que les inserts sont orientés conjointement aux palettes par le premier dispositif de manipulation.

10. Système de manipulation selon la revendication 7 ou 8, caractérisé en ce que les palettes (20 à 20d) portent chacune un nombre d'inserts (21a à 21d) égal au nombre d'inserts (21a à 21d) par groupe ou à un multiple entier ou un sous-multiple dudit nombre d'inserts par groupe.

11. Système de manipulation selon la revendication 10, caractérisé en ce que les inserts (21a à 21d) sont agencés sur les palettes (20 à 20d) à des emplacements (33a à 33d), dont les coordonnées relatives correspondent aux coordonnées relatives des cavités (14', 14'') dans l'outil (12), et en ce que le premier dispositif de manipulation (135) ne fait qu'orienter les inserts (21a à 21d) sur leurs emplacements (33a à 33d).

12. Système de manipulation selon l'une au moins des revendications 1 à 11, caractérisé en ce que le second dispositif de manipulation (25 ; 60) insert les inserts (21a à 21d ; 41a à 41d) par groupes dans les cavités (14', 14'').

13. Système de manipulation selon l'une au moins des revendications 1 à 12, caractérisé en ce que le premier et le second dispositifs de manipulation sont assemblés par construction.

14. Procédé pour fabriquer des objets en matière plastique contenant des inserts surmoulés (21a à 21d ; 41a à 41d) sous forme d'éléments individuels ou d'ensembles dans une machine à mouler par injection des matières plastiques avec un outil (12) doté d'une pluralité de cavités (14', 14''), lesdites cavités (14', 14'') se différenciant par l'orientation des objets en matière plastique, un insert (21a à 21d ; 41a à 41d) d'un groupe étant à chaque fois associé à une cavité (14', 14'') prédéterminée, avec des porte-pièce pour amener les inserts (21a à 21d ; 41a à 41d) et avec un système de manipulation (10), comprenant les étapes consistant à :
a) rassembler en groupe les inserts (21a à 21d ; 41a à 41d) amenés par les porte-pièce au moyen d'un premier dispositif de manipulation (35 ; 51 ; 135), les groupes étant formés de telle sorte qu'après constitution d'un groupe, l'orientation des inserts (21a à 21d ; 41a à 41d) dans le groupe est identique à l'orientation desdits inserts (21a à 21d ; 41a à 41d) dans les cavités (14', 14'') ; et
b) insérer les groupes d'inserts (21a à 21d ; 41a à 41d) dans des cavités (14', 14'') au moyen d'un second dispositif de manipulation (25 ; 60),
caractérisé en ce que
c) les inserts (21a à 21d ; 41d à 41d) sont manipulés et orientés un par un et successivement au moyen du premier dispositif de manipulation (35 ; 51 ; 135) lors de la constitution des groupes.
